# EUROPEAN PATENT APPLICATION

(11) **EP 4 800 604 A1**
(43) Date of publication of application: **02.09.2026**
(21) Application number: 25161004.4
(22) Date of filing: 28.02.2025
(51) Int. Cl.: G06N 3/0455, G06N 3/0895

(54) **METHOD AND SYSTEM FOR TRAINING A MACHINE LEARNING MODEL HAVING A TRANSFORMER ARCHITECTURE**

(71) Applicant: Bayerische Motoren Werke Aktiengesellschaft, 80809 München (DE)
(72) Inventor: Forstenhaeusler, Maximilian, 85737 Ismaning (DE)

(57) **Abstract**

The present invention relates to a method for training a machine learning model (200) having a transformer architecture (202), the method comprising: providing (S1) time series training data (203) to the machine learning model (200) as input data (204), the machine learning model (200) processing the time series training data (203) via at least one attention layer (206) of at least one encoder layer (208) of the transformer architecture (202); applying (S2) a dynamic region masking (210) of the time series training data (203) based on attention weights of the attention layer (206) to derive masked training data(212); providing (S3) the masked training data (212) to the machine learning model (200) as input data (204); performing (S4) semi-supervised contrastive learning (214) of a latent space representation (216) of the time series training data (203) and the masked training data (212) derived from the at least one encoder layer (208); and providing (S5) the thereby trained machine learning model (218) for performing a downstream task.

## Description

The disclosure relates to a method for training a machine learning model having a transformer architecture. Also, the disclosure relates to a system for training a machine learning model having a transformer architecture.

Accurate prediction of human intent using sequentially ordered spatiotemporal data plays a pivotal role in advancing a wide range of applications. However, real-world scenarios often introduce significant challenges due to environmental factors and limitations in signal measurement. These factors result in non-stationary and irregularly sampled datasets, complicating the development of predictive algorithms.

Advancements in neural architectures, such as Long Short-Term Memory (LSTM) networks and Transformer models, have significantly improved the handling of temporal and sequential data. Existing machine learning approaches, including models such as TARNet and ViTST, have demonstrated capabilities in processing sequential data. Despite these advancements, most algorithms assume fully observed, stationary, and regularly sampled datasets - an assumption frequently unmet in practical applications.

In fields such as the automotive industry, irregularities in data sampling are particularly evident. For instance, technologies like Ultra-Wideband (UWB) and Bluetooth Low-Energy (BLE) have been integrated to enable precise localization and enhance digital car keys. These systems rely on time-of-flight calculations, which are prone to irregular sampling due to ranging schemes, signal interference or other external conditions. Such challenges underline the importance of developing robust methods capable of effectively handling irregular, non-stationary data for accurate intent prediction.

The necessity to address these real-world complexities motivates ongoing exploration of advanced methodologies to improve the precision and reliability of predictive models.

In the realm of this, it is an object of the present invention to provide an improved method and/or system.

This task is solved by the subject matter of the independent claims. Advantageous embodiments of the invention are given in the dependent claims.

The invention relates to a method for training a machine learning model having a transformer architecture, the method comprising: providing time series training data to the machine learning model as input data, the machine learning model processing the time series training data via at least one attention layer of at least one encoder layer of the transformer architecture; applying a dynamic region masking of the time series training data based on attention weights of the attention layer to derive masked training data; providing the masked training data to the machine learning model as input data; performing semi-supervised contrastive learning of a latent space representation of the time series training data and the masked training data derived from the at least one encoder layer; and providing the thereby trained machine learning model for performing a downstream task.

The invention also relates to a system for training a machine learning model having a transformer architecture, the system comprising: a first module for providing time series training data to the machine learning model as input data, the machine learning model processing the time series training data via at least one attention layer of at least one encoder layer of the transformer architecture; a second module for applying a dynamic region masking of the time series training data based on attention weights of the attention layer to derive masked training data; a third module for providing the masked training data to the machine learning model as input data; a fourth module for performing semi-supervised contrastive learning of a latent space representation of the time series training data and the masked training data derived from the at least one encoder layer; and a fifth module for providing the thereby trained machine learning model for performing a downstream task. The first to fifth module is preferable a software module, respectively. Preferably, at least two of the first to fifth modules can be united in a common module.

The aspects considered for the method apply, mutatis mutandis, for the system and vice versa.

Preferably, training a machine learning model having a transformer architecture involves using self-attention mechanisms to process sequential data efficiently, capturing long-range dependencies and contextual relationships within the input data. Preferably, applying a dynamic region masking of the time series training data based on attention weights of the attention layer to derive masked training data involves selectively obscuring portions of the input sequence, guided by the attention distribution, to enhance the model's ability to generalize and learn robust temporal patterns. Preferably, performing semi-supervised contrastive learning of a latent space representation of the time series training data and the masked training data derived from the at least one encoder layer involves leveraging both labeled and unlabeled data to optimize the separation of meaningful representations within the latent space, enhancing the model's ability to distinguish underlying structures and patterns in the time series data.

Prior works show that task-specific importance of elements within a sequence varies with reference to their impact on downstream tasks. The presented model framework adopts this characteristic by dynamically masking regions around features that the machine learning model deems important. This may force the model to learn changes in statistical properties and irregularly sampling induced by the masking. The presented method may mask regions to exaggerate non-stationary and irregular sampling characteristics. Therefrom, it may be rationalized that reconstructing these key sequential regions may enable the model to generate more effective latent representations for the downstream task, compared to prior approaches that either use random masking or no masking at all. During computation of a preferably multi-head attention, while executing the downstream task, the presented model may dynamically collect the attention weights.

A transformer architecture preferably consists of multiple layers of self-attention mechanisms and feedforward networks, enabling efficient parallel processing and contextual understanding of sequential data. Dynamic region masking preferably involves selectively occluding specific parts of the time series training data based on relevant importance scores, ensuring that the model learns robust representations by focusing on critical patterns while ignoring redundant information. Attention weights preferably represent the learned importance scores assigned to different time steps within the time series, allowing the model to prioritize influential regions for better contextual representation. The attention layer preferably processes input sequences by computing weighted dependencies across different time steps, enhancing the model's ability to capture long-range dependencies and intricate temporal structures. Semi-supervised contrastive learning preferably leverages both labeled and unlabeled data to optimize a latent space representation by maximizing similarity between transformed versions of the same input while pushing apart dissimilar representations, thereby improving the model's generalization capabilities. A latent space representation of the time series training data preferably encodes the underlying temporal patterns into a condensed, abstract form that preserves essential features while enabling efficient downstream tasks such as forecasting, classification, or anomaly detection.

The time series training data may be denoted with D = {(Sᵢ, yᵢ)|i = 1, . . . ,M} containing M samples. Each sequence, Sᵢ ∈ R^{N} may have N elements. Every sequence Sᵢ may be assigned to a label yᵢ ∈ {1, ... , C}, where C may be the number of classes. Since each data point in the sequence may have an associated timestamp, the j^{th} data point in Sᵢ may be represented as ${s}_{j}^{i} = \left({x}_{j}^{i}, {t}_{j}^{i}\right) ∈ {ℝ}^{2}$. By concatenating the data points sⁱⱼ for each j, a sequence ${S}_{i} = \left\{\left({x}_{j}^{i}, {t}_{j}^{i}\right)\left|j=1,…,N\right.\right\} ∈ {ℝ}^{N \times 2}$ can be constructed. For multivariate time series, the dimensionality may not be fixed to two, thus ${S}_{i} ∈ {ℝ}^{N \times D}$, where $N , D ∈ {ℕ}_{\neq 0}$. Via the presented method, it is possible to predict the class label yᵢ ∈ {1, ..., C} for each time series sequence Si | in D to a given dataset 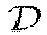 = {(*Sᵢ*, *yᵢ*)|*i* = 1,..., *M*}, where ${S}_{i} ∈ {ℝ}^{N \times D}$ may be multivariate.

In real-world scenarios, environmental factors and sensor limitations often result in non-stationary and irregularly sampled data, posing significant challenges for subsequent data processing. To address this, the present invention provides a transformer-based machine learning model framework, which may also serve as a universal framework for time series modeling. The provided machine learning model employs a dynamic attention-based regional masking scheme combined with semi-supervised contrastive learning to enhance task-specific latent representations. Thereby, the inventors were able to demonstrate via experimental study on several datasets, which are varying in domains, composition, sequence lengths, training samples, and applications, the efficacy and practicality of the presented model training approach. Thereby, improvements were made in comparison with the state-of-the-art results across regular, irregularly sampled and spatiotemporal time series datasets as well as datasets that are composed of non-stationary, irregularly sampled, and/or spatiotemporal time series.

In another aspect, the attention weights of the attention layer comprise information about a number of attention layers and/or a batch size of a time series training dataset comprising the time series training data and/or a number of elements in a sequence of the time series training data.

The attention weights of the attention layer preferably encode structural and statistical information about the time series training data, allowing the model to adaptively focus on different regions within the sequence. These weights preferably capture dependencies across multiple attention layers, ensuring that hierarchical patterns and relationships within the time series are effectively learned. The attention weights preferably incorporate batch size information, enabling the model to adjust its learning dynamics based on the distribution and variability of multiple training samples processed simultaneously. The attention weights gathered may be denoted as A ∈ R^{L×B×N×N}, where L, B, N may represent the number of attention layers, mini-batch size, and number of elements in the sequences, respectively. Thereby, a distinct masking scheme may be created for each element in a mini-batch of the training data, e.g., if B = 16, 16 different masks may be generated.

In another aspect, the dynamic region masking comprises an attention rollout technique considering a flow of information within the layers of the transformer architecture.

The dynamic region masking preferably utilizes an attention rollout technique to aggregate and interpret the contribution of attention weights across multiple layers of the transformer architecture, ensuring a comprehensive understanding of information flow. This technique preferably tracks how attention distributions evolve across layers, enabling the model to identify and emphasize critical regions within the time series training data. The attention rollout preferably propagates attention scores through successive layers, allowing the model to refine its focus dynamically based on deeper contextual insights. By considering the flow of information within the layers, the dynamic region masking preferably enhances the robustness of learned representations, ensuring that the most relevant temporal patterns are retained while reducing the influence of less informative regions. To aggregate the attention, the present model may employ an attention rollout technique rather than summation or averaging. This approach allows considering the flow of information within the transformer layers, rather than mere aggregation.

The operation may account for padded sequences by masking the attention if necessary, i.e., ${A}^{˜} = \left\{\begin{matrix}\left(\frac{1}{2}{A}_{i , : , : , :}⊙M+\frac{1}{2}{I}_{N}\right) ⊗ {{A}^{˜}}_{i - 1 , : , : , :} & if i > 0 , \\ {A}_{i , : , : , :} ⊙ M & if i = 0\end{matrix}\right.$ where Ã ∈ R_{B×N×N} may represent the attention aggregated and M the mask accounting for padded input sequences. The presented model may then compute the attention scores σ as following equation (2), ${σ}_{i , k ′} = \frac{{\sum }_{j = 1}^{N} {{A}^{˜}}_{i , j , k}}{{\sum }_{k = 1}^{N} {\sum }_{j = 1}^{N} {{A}^{˜}}_{i , j , k}} ,$ where Ã_{i,j,k} is attention weight assigned to sₖ⁽ⁱ⁾ during the update of sⱼ⁽ⁱ⁾. A greater σ_{i,k'} value indicates a higher importance of the *k*-th element in S⁽ⁱ⁾.

In another aspect, the regional masking comprises determining a maximum number of elements of the time series training data that are to be masked, determining a number of sequential elements of the time series training data that are to be masked based on attention scores of the at least one attention layer, and determining bounds of a region of the time series training data that is to be masked.

The regional masking preferably involves defining an upper limit on the number of elements within the time series training data that can be masked, ensuring that sufficient contextual information is preserved while introducing controlled perturbations for robust learning. It preferably determines the number of sequential elements to be masked by leveraging attention scores from at least one attention layer, allowing the model to focus on less informative or redundant regions while maintaining the integrity of key temporal patterns. The process preferably includes identifying the precise boundaries of the masked region, ensuring that the masking operation remains adaptive to the structural characteristics of the time series data. By dynamically adjusting the masking strategy based on attention scores, the regional masking preferably enhances the model's ability to generalize across different time series patterns.

The creation of the regional mask, g(ζ, γ, *φ*, ·) may require the following hyper-parameters, namely ζ, γ, *φ*. Thereby, *φ* determines the maximum number of elements that are masked, ζ determines the number of sequential elements that are masked based on attention scores, while γ determines the bounds of the region to be masked.

Algorithm 1, as shown below, may implement the arithmetic of the dynamical attention-based regional masking scheme introduced in the presented transformer-based model architecture. In the algorithm, A refers to the attention-weights collected from the multi-head attention layer in the encoder, N refers to an array stating the sequence lengths per element in the mini-batch and B refers to the batch-size of the mini-batch.

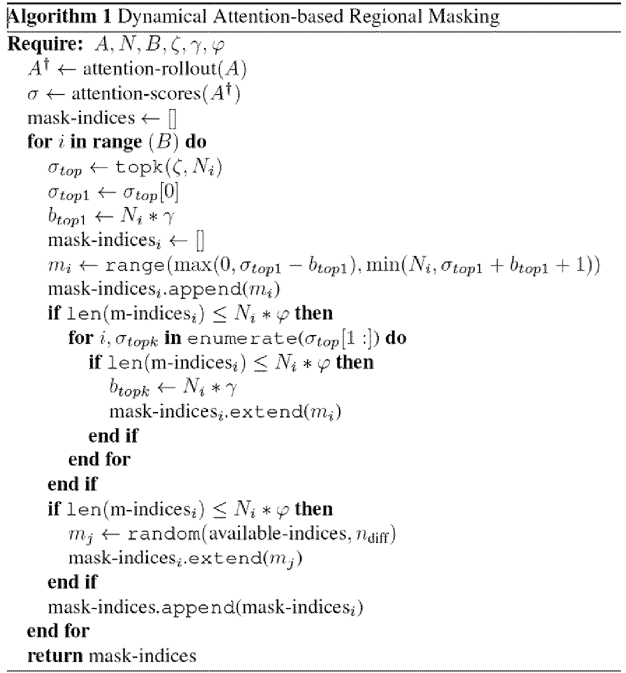

In another aspect, the performing semi-supervised contrastive learning comprises creating two correlated latent representations and learning to optimize a trade-off between the two latent representations by leveraging batch-wise positive pairs of masked and unmasked embeddings of the time series training data and class-wise positive pairs of masked and unmasked embeddings of the time series training data of a same class. In other words, the dynamic attention-based regional masking may create two representations, whereas the semi-supervised contrastive learning approach leverages these two representations.

Rather than focusing on learning reconstructions of the representation during a downstream task, the presented method aims to enhance the latent space representation upon which the model bases its downstream task predictions. To achieve this, a contrastive learning approach is employed to extract high-quality, discriminative features. Thereby, the dynamic attention-based regional masking allows the creation of two correlated latent representations, while training for a downstream task. The presented method thereby may learn to optimize the trade-off between these representations, facilitating contrastive learning by leveraging the batch-wise positive pair from the masked (*Z̃ᵢ*) and unmasked (Zi) embeddings of the same input sequence, and class-wise positive pair from masked (*Z̃ᵢ*) and unmasked (Zi) embeddings of the same class. By maximizing the agreement between batch-wise and class-wise latent representations, the model's robustness can be enhanced to perturbations and its generalization can be improved, making the model less prone to overfitting and more resilient to issues such as non-stationary and irregular sampling.

In another aspect, based on the positive pairs, self-supervised contrastive learning is performed using batch-wise similarities between the embeddings of the time series training data and supervised contrastive learning is performed using class-wise similarities between the embeddings of the time series training data.

Based on the positive pairs, the presented model fuses two types of contrastive learning tasks, namely (i) self-supervised learning using batch-wise similarity and (ii) supervised learning using class-wise similarity. When sampling mini-batches during training, the latent variable may become a three-dimensional tensor representation ${Z}_{i} , {{Z}^{˜}}_{i} ∈ {ℝ}^{N \times B \times D}$, where *Zᵢ* = *f*(*Sᵢ*) and *Z̃ᵢ* = *f*(*g*(*φ*, γ, *ζ*, *Sᵢ*). D is the dimension of the latent embedding. To extract the similarity scores per sequential element in the batch (before computing a cosine similarity), the mean ${\hat{Z}}_{bd}^{i}$ along the first dimension of the latent variables *Zᵢ* and *Z̃ᵢ* may be computed, thus ${\hat{Z}}_{bd}^{i} = \frac{1}{N} {\sum }_{n = 1}^{N} {Z}_{nbd}^{i}$*.* In a mini-batch of size B, elements at position i in the latent embedding may originate from the same input sequence Sᵢ. Thus, forming B batch-wise positive pairs and B(B - 1) negative pairs. By having C classes per batch, ${\sum }_{c = 1}^{C} {n}_{c}^{2}$ class-wise positive pairs and ${\left({\sum }_{c = 1}^{C} {n}_{c}\right)}^{2} - \left({\sum }_{c = 1}^{C} {n}_{c}^{2}\right)$ negative pairs may be obtained; n_{c} may be the number of samples per class per mini-batch.

In another aspect, the semi-supervised contrastive learning comprises minimizing a batch-wise contrastive loss function and a class-wise contrastive loss function.

The batch-wise contrastive loss for a single positive batch-wise sample may be formulated as: ${l}_{bw}^{i} = - log \left(\frac{exp \left(sim\left({z}_{i}, {\hat{{z}^{˜}}}_{i}\right)/τ\right)}{{\sum }_{k = 1}^{B} {I}_{\left[k\neq i\right]} exp \left(sim\left({z}_{i}, {\hat{{z}^{˜}}}_{k}\right)/τ\right)}\right)$ and the class-wise contrastive loss for a single positive class-wise sample as: ${l}_{cw}^{i} = - log \left(\frac{{\sum }_{j = 1}^{B} {I}_{\left[{C}_{j}={C}_{i}\right]} exp \left(sim \left({z}_{i}, {\hat{{z}^{˜}}}_{j}\right)/τ\right)}{{\sum }_{k = 1}^{B} {I}_{\left({C}_{k}\neq {C}_{i}\right)} exp \left(sim\left({z}_{i}, {\hat{{z}^{˜}}}_{k}\right)/τ\right)}\right)$

The indicator function may differ in the two cases: ${I}_{\left[k\neq i\right]}$ for batch-wise, which is 1 if *k* ≠ *i*, ${I}_{\left[{C}_{k}\neq {C}_{i}\right]}$ for class-wise, which is 1 if the class of i is different from class of k, and vice versa for ${I}_{\left[{C}_{k}={C}_{i}\right]}$.

In another aspect, a fused loss function for the semi-supervised contrastive learning is provided by weighting the batch-wise contrastive loss function and the class-wise contrastive loss function based on a tunable hyperparameter.

The fused contrastive loss weights batch-wise and class-wise contrastive losses: ${L}_{STaR - CL} = {λ}_{fuse - CL} {L}_{bw} + \left(1-{λ}_{fuse - CL}\right) {L}_{cw}$ where ${L}_{bw} = \frac{1}{B} {\sum }_{i = 1}^{B} {l}_{bw}^{i}$ and ${L}_{cw} = \frac{1}{B} {\sum }_{i = 1}^{B} {l}_{cw}^{i}$. The loss of the present model is a weighted sum of L_{CE} and the fused contrastive loss, L_{STaR-CL}: ${L}_{STaRFormer} = {L}_{CE} + {λ}_{CL} {L}_{STaR - CL} ,$ where λ_{CL} is a tunable hyperparameter and λ_{fuse-CL} = 0.5 to equally weight batch- and class-wise similarities.

In another aspect, the time series training data is classified using a token capturing dependencies between sequential elements of the time series training data via a self-attention mechanism of the at least one encoder layer.

The present model is built upon a transformer-encoder only architecture. The model may consist of two towers of N encoder-blocks that may share a common set of model parameters. Without loss of generality, classification, anomaly detection or regression can be considered as downstream tasks, i.e., by adding different output heads. Instead of performing autoregressive prediction or predictions based on the concatenation of the entire embedded representation, a special token may be utilized for classification. This token may effectively capture the dependencies between sequential elements via the self-attention mechanism of the encoder.

The presented model only includes transformer encoder layers as the central component. Additionally, encoders allow for a general framework for learning task-specific reconstructions that can be applied to a wide range of tasks. The encoder layer may consist of two sub-layers, a multi-head self-attention mechanism and a fully connected neural network. Both layers may be followed by a residual connection and a normalization layer. The self-attention may be a mechanism that allows each element of a sequence to consider the entire sequence when computing its representation. This capability may help the model to grasp the context surrounding each token in a sequence, making it highly effective in sequential data tasks. This allows the model to effectively capture both long-term and short-term dependencies within the sequence. This feature may address the limitations of previous deep learning (DL) approaches like LSTM or RNN, which struggle with capturing such dependencies. In order for attention to work, each sequence has been embedded as a vector representation. Then, a series of queries (Q), key (K) and value (V) terms are formed; Q is a representation the model focuses on, K determines the relevance of each element, and V is a representation used to form output scores. A Scaled-Dot-Product Attention approach may compute a weighted sum of the input values with the attention weights, where the weights are determined by the similarity between input elements computed via the softmax function. The attention scores are normalized by the square root of the dimension of the key vectors to stabilize gradients during training, i.e., $Attention \left(Q, K, V\right) = softmax \left(\frac{{QK}^{T}}{\sqrt{{d}_{k}}}\right) V ,$ where Q, K, V ∈ R^{M×B×D} and dₖ is the dimension of key vectors. Often, not just a single self-attention mechanism is performed, but rather a mechanism referred to as multi-head attention. In multi-head attention the queries, keys and values may be linearly projected n_{head} times and then concatenated and projected to the model's embedding dimension, i.e., $MultiHeadAttention \left(Q, K, V\right) = \left({⊕}_{i}^{{n}_{head}}{H}_{i}\right) {W}^{O}$ where n_{head} is a tunable hyperparameter and ${H}_{i} = Attention \left({QW}_{i}^{Q}, {KW}_{i}^{K}, {VW}_{i}^{V}\right)$ represents an attention head. A necessity for Transformer models is the encoding process of the sequential inputs. When the sequential input is vectorized, the input representation loses the sequential information, i.e. the order of the sequence. Hence, an underlying property of the data type is lost. This is why it is essential to inject the sequential information about the relative or absolute sequential position into the vector representation. To do so, sinusoidal positional encodings are introduced, which are added to the encoded sequence before it is passed to the transformer encoder layer, i.e.: ${PE}_{\left(pos,2i\right)} = sin \left(pos/{10000}^{2 i / {d}_{model}}\right)$ ${PE}_{\left(pos,2i+1\right)} = cos \left(pos/{10000}^{2 i / {d}_{model}}\right)$

As above-mentioned, in certain time series, the sequence lengths N can vary. Consequently, to process batches of sequences with differing lengths, padding is necessary. To ensure that padded elements are not considered during the attention mechanism, it is crucial to introduce a batch-wise masking strategy. This mask is passed to the attention process to prevent artificially padded elements from being attended to, thereby preserving the integrity of the sequential data. This mask might further be required in different output heads or loss formulations.

In another aspect, based on the token, classification is performed using a multi-layer perceptron layer of the machine learning model.

Based on this token, a multi-layer perceptron (MLP) layer, refer to equation (11) and equation (12), may perform the classification. The output of MLP layer, i.e., the prediction *ŷ*, may be passed through either the Cross Entropy (CE) loss function for multi-class predictions ${L}_{CE} = {\sum }_{i = 1}^{C} {y}_{i} log \left(p\right)$, or the Binary Cross Entropy loss for binary predictions *L*_{CE} = *yᵢ* log(*ŷᵢ*) + (1 *- yᵢ*) log(*ŷᵢ*).

The reduced version of our MLP layer used in the presented model is a fully connected neural network followed by a sigmoid or softmax activation, depending on if multi-class predictions are required, i.e., $\hat{y} = σ \left({X}_{CLS}W+b\right) ,$ while, the default version adds an activation layer and a normalization layer, i.e., ${\hat{y}}_{i} = σ \left(\left(Norm\left(σ\left({X}_{CLS}W+b\right)\right)\right)W+b\right) .$ ${X}_{CLS} ∈ {ℝ}^{M \times D}$ is the specialized token and $W ∈ {ℝ}^{D \times K}$ and $b ∈ {ℝ}^{K}$ are the model weights and bias. The inner activation function, σ is a tunable hyperparameter.

In another aspect, the time series training data comprises irregularly sampled time series data and/or spatiotemporal sequential data and/or non-stationary, spatiotemporal and irregularly sampled time series data and/or regular time series data.

The time series training data preferably includes irregularly sampled time series data, ensuring that the model can effectively handle missing or unevenly spaced observations while maintaining temporal coherence. The training data preferably includes non-stationary, spatiotemporal, and irregularly sampled time series data, enabling the model to adapt to evolving statistical properties and complex dependencies across multiple dimensions. Additionally, it preferably comprises regular time series data, ensuring compatibility with conventional sequential learning tasks while maintaining the flexibility to generalize across different temporal structures.

In another aspect, there is provided a method of applying a machine learning model trained according to the presented method. The method comprising providing the trained machine learning model, applying the trained machine learning model in an application for classification and/or in an application for anomaly detection and/or in an application for regression, for localization and tracking via ultra-wideband technology and/or in an application of digital car keys.

With the present invention, there can be provided an improved method and system to forecast the intent of a smart device user within confined areas surrounding a vehicle, utilizing real-world data.

The digital car key (DK) may enable the use of a smart device as a vehicle key, facilitating hands-free or passive access to a vehicle through the smart device. The DK technology is standardized by the Car Connectivity Consortium (CCC), led by Apple, BMW, Ford, Google, Mercedes, Xiaomi and other global corporations. Thereby, car manufacturers have started to incorporate ultra-wideband (UWB) and Bluetooth Low-Energy (BLE) to enhance capabilities of digital car keys (DK). This may ensure precise and secure vehicle access while paving the way for the creation of additional applications for connected vehicles. To detect a paired personal device nearby, a Bluetooth connection is initially established between the smart device and the vehicle. Following the exchange of security protocols, an UWB connection is set up to enable secure ranging of the smart device. The vehicle may be equipped with multiple UWB antennas. Between each UWB anchor and the smart device, time of flight calculations may be executed, allowing precise localization due to UWB's pulse duration of 2 nanoseconds. When the localization is recorded, one can track the smart device around the vehicle, enabling the ability to perform intent predictions based on the sequentially collected localization. However, various external factors can influence the localization accuracy, including materials in different vehicle models, external environments, weather conditions, interference from other signals, and the position of the smart device (e.g., in hand, front pocket, or handbag). These interferences can introduce non-stationary characteristics to the sequential data. Such sequential data can be processed by the presented machine learning model in an enhanced and optimized manner, i.e., by improving the accuracy of data reconstruction through the transformer architecture by 0,5 % over other state-of-the-art models.

The invention also includes a computer program product comprising instructions that, when the method is executed by a computer, cause the computer to execute the method.

The invention further comprises a computer-readable medium on which the computer program product is stored.

Herein, the term "vehicle" encompasses every system for transporting people and goods on roads, e.g. cars, lorries, buses, motorhomes, motorcycles, on rails, on water or in the air. The vehicle can be driven by a combustion engine or a hybrid drive or a purely electric drive.

Examples of the invention are shown in the figures and are described in more detail below. Unless otherwise indicated, the same reference signs are used for identical or equivalent elements.
- Figure 1:: a schematic flowchart of a refinement of the presented method,
- Figure 2:: a schematic view of a refinement of the presented system,
- Figure 3:: a schematic view of a refinement for a model architecture,
- Figure 4:: a single batch from a training dataset with size 16 for an encoder with N = 4 layers,
- Figure 5:: seven different regional masks for the same batch,
- Figure 6:: visualizations of models latent spaces using t-SNE,
- Figure 7:: example visualizations from two different batches of a dataset,
- Figure 8:: similarity heatmaps illustrating the contrastive loss formulation, and
- Figure 9:: the model's contrastive learning.

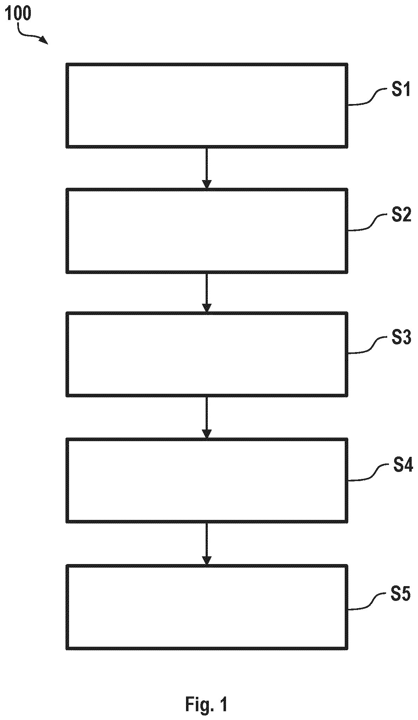

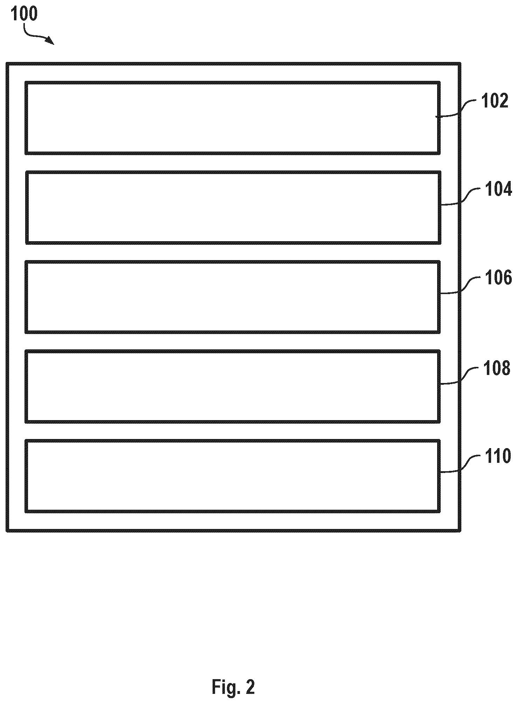

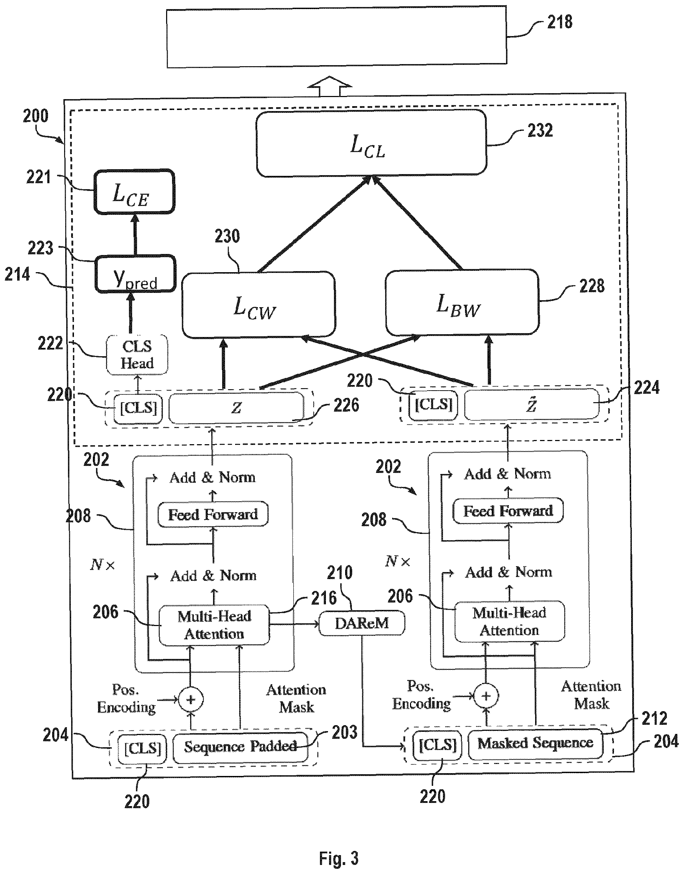

In Figure 1, the method according to the invention is shown in a first embodiment by means of a flow chart. The method is for training a machine learning model 200 having a transformer architecture 202 (see Figure 3). The method may be executed by a system 100, schematically shown in Figure 2. Therefore, the system 100 may comprise one or more modules 102, 104, 106, 108, 110 that may be each provided as software modules for implementing on a computer hardware. Figure 3 thereby shows a high-level architecture of the machine learning model 200, where the left tower may perform downstream tasks while the right tower may perform self-supervised & supervised representation learning. The transformer architecture 202 is an encoder-only architecture.

The method comprises providing S1 time series training data 203 to the machine learning model 200 as input data 204, the machine learning model 200 processing the time series training data 203 via at least one attention layer 206 of at least one encoder layer 208 of the transformer architecture 202. The transformer architecture 202 consists of two towers of N encoder-blocks each that may share a common set of model parameters.

The method comprises applying S2 a dynamic region masking 210 of the time series training data 203 based on attention weights of the attention layer 206 to derive masked training data 212.

The method comprises providing S3 the masked training data 212 to the machine learning model 200 as input data.

The method comprises performing S4 semi-supervised contrastive learning 214 of a latent space representation 216 of the time series training data 203 and the masked training data 212 derived from the at least one encoder layer 208.

The method comprises providing S5 the thereby trained machine learning model 218 for performing a downstream task. Thus, there may be provided the trained machine learning model 218 for applying the trained machine learning model 218 in an application for classification and/or in an application for anomaly detection and/or in an application for regression, for localization and tracking via ultra-wideband technology and/or in an application of digital car keys.

The attention weights of the attention layer 206 may comprise information about a number of attention layers and/or a batch size of a time series training data 203 set comprising the time series training data 203 and/or a number of elements in a sequence of the time series training data 203. It has to be considered that the attention weights may hold importance of each sequential element to each other.

The dynamic region masking 210 may comprise an attention rollout technique considering a flow of information within the layers of the transformer architecture 202. The regional masking 210 may further comprise determining a maximum number of elements of the time series training data 203 that are to be masked, determining a number of sequential elements of the time series training data 203 that are to be masked based on attention scores of the at least one attention layer 206, and determining bounds of a region of the time series training data 203 that is to be masked.

In the shown example, the time series training data 203 is classified using a token 220 capturing dependencies between sequential elements of the time series training data 203 via a self-attention mechanism of the at least one encoder layer 208. Based on the token 220, classification is performed using a multi-layer perceptron (MLP) layer 220 of the machine learning model 200. The output 223 of the MLP layer 220, i.e., the prediction y_{pred}, may be passed through either the Cross Entropy (CE) loss function 221 for multi-class predictions or the Binary Cross Entropy loss for binary predictions.

The performing of the semi-supervised contrastive learning 214 comprises creating two correlated latent representations 224, 226 and learning to optimize a trade-off between the two latent representations 224, 226 by leveraging batch-wise BW positive pairs of masked and unmasked embeddings of the time series training data 203 and class-wise CW positive pairs of masked and unmasked embeddings of the time series training data 203 of a same class. Based on the positive pairs, self-supervised learning is performed using batch-wise BW similarities between the embeddings of the time series training data 203 and supervised learning is performed using class-wise CW similarities between the embeddings of the time series training data. The semi-supervised contrastive learning 214 thereby comprises minimizing a batch-wise contrastive loss function 228 and a class-wise contrastive loss function 230. Thereby, a fused loss function 232 for the semi-supervised contrastive learning 214 is provided by weighting the batch-wise contrastive loss function 228 and the class-wise contrastive loss function 230 based on a tunable hyperparameter.

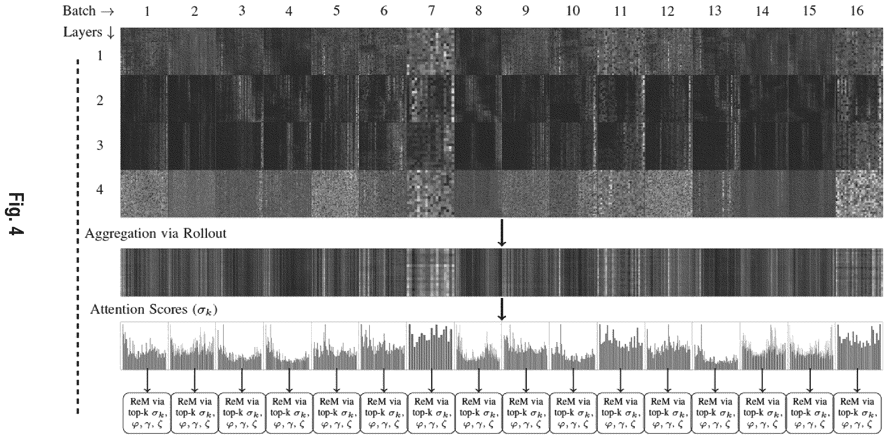

Figure 4 shows a dynamical attention-based regional masking methodology exemplified by a single batch from a time series training dataset 203 with size 16 for an encoder with n = 4 layers. Thereby, several masking hyperparameters are shown namely *φ* = masking threshold, y= region bound of mask, and ζ= ratio of top-k elements. The regional masks are created by the parameters *σ*, *φ*, *γ*, ζ.

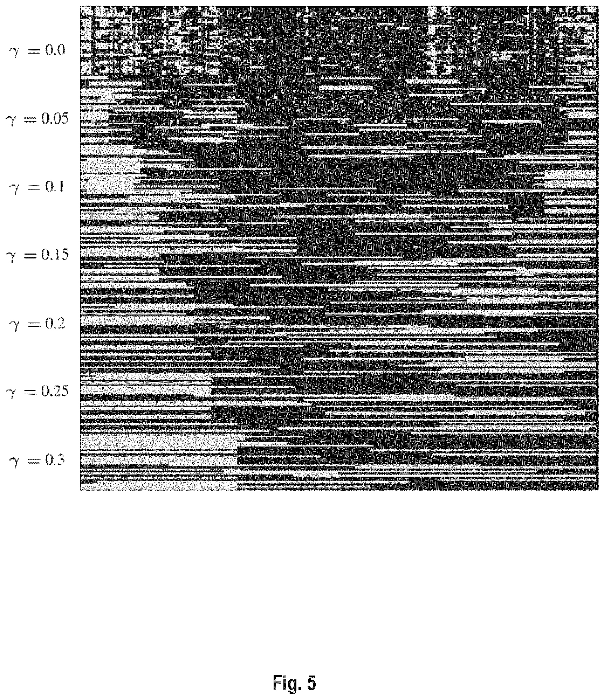

Figure 5 shows seven different regional masks for the same batch. Thereby, sequences are stacked horizontally. Regional masks are defined by different γ in the regional masking algorithm with ϕ and ζ constant (ϕ ≈ 0.2, ζ = 0.3). Figure 5 shows the influence of γ on the creation of masks in the presented model 200. Table 1 reports the results of an ablation study. The observed trend indicates that on a macro scale, masking larger regions enhances the performance of the presented model 200. 7 out of 8 top scores were achieved by masking regions of larger than 10% of the global sequence length around selected elements. For instance, the accuracies for DKT, GL, and PAM were 0.850, 0.898, and 0.970 with γ = 0.0, compared to 0.852, 0.908, and 0.976 for optimal configurations of γ, 0.25, 0.05, and 0.1, respectively. On a micro scale, performance peaks were observed at optimal configurations with best performance for DKT at γ = 0.25. For GL and PAM, the performance peaks were found at smaller regions. Further increasing or decreasing the masked regions gradually deteriorated the results, supporting our initial hypothesis. These findings emphasize the significance of masking regions rather than individual sequential elements. The results underscore the necessity of precise calibration of masking parameters to optimize model's performance.

| # | γ | DKT (φ ≈ 0.427, ζ = 0.2) | | GL (φ ≈ 0.472, ζ = 0.3) | | PAM (φ ≈ 0.207, ζ = 0.3) | | | |
|---|---|---|---|---|---|---|---|---|---|
| | | Accuracy | F_{0.5} | Accuracy | F_{0.5} | Accuracy | Precision | Recall | F₁ |
| 1 | 0.00 | 85.0 ± 0.2 | 85.0 ± 0.2 | 89.8 ± 1.9 | 87.9 ± 1.8 | 97.0 ± 0.7 | 97.4 ± 0.2 | 97.3 ± 0.6 | 97.3 ± 0.3 |
| 2 | 0.05 | 85.0 ± 0.3 | 84.8 ± 0.3 | **90.4** ± 1.6 | 88.3 ± 1.9 | 94.9 ± 2.5 | 96.5 ± 0.6 | 96.6 ± 0.5 | 96.5 ± 0.4 |
| 3 | 0.10 | 94.9 ± 0.3 | 84.9 ± 0.2 | 90.3 ± 1.2 | 88.2 ± 1.3 | **97.6** ± 0.9 | 97.3 ± 0.4 | **97.6** ± 0.3 | 97.4 ± 0.3 |
| 4 | 0.15 | 85.0 ± 0.2 | 85.0 ± 0.2 | 90.3 ± 1.5 | 88.2 ± 1.7 | 97.1 ± 1.1 | **97.5** ± 0.6 | 97.5 ± 1.0 | **97.5** ± 0.8 |
| 5 | 0.20 | 85.1 ± 0.1 | 85.1 ± 0.1 | 90.1 ± 1.1 | 87.9 ± 1.0 | 96.2 ± 0.8 | 96.7 ± 0.5 | 96.6 ± 0.6 | 96.6 ± 0.4 |
| 6 | 0.25 | **85.2** ± 0.3 | **85.2** ± 0.3 | 90.1 ± 1.6 | **88.4** ± 1.4 | 96.3 ± 0.9 | 96.9 ± 0.7 | 96.5 ± 0.6 | 96.7 ± 0.5 |
| 7 | 0.30 | 85.0 ± 0.1 | 85.0 ± 0.1 | 90.3 ± 1.3 | 88.2 ± 1.4 | 96.3 ± 0.9 | 96.7 ± 0.5 | 96.4 ± 0.5 | 96.5 ± 0.4 |

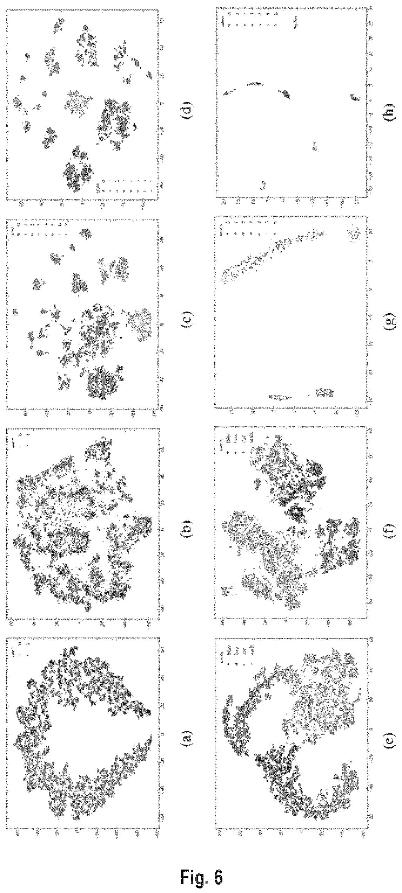

Figure 6 shows visualizations of models latent spaces using t-SNE; (a) and (b) are representations of DKT dataset, (c) and (d) of the PAM dataset, (e) and (f) of the GL dataset, and (g) and (h) of PS dataset (UCR-UEA). All t-SNE plots were plotted with perplexity 50.

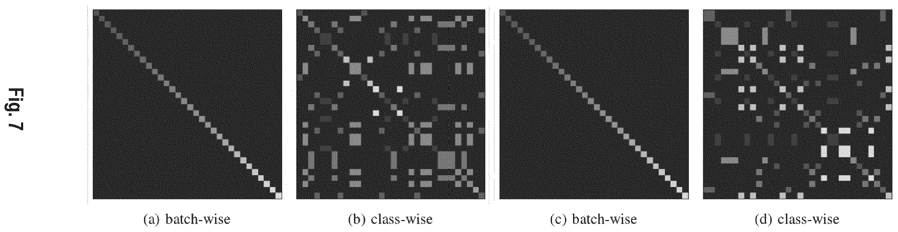

Figure 7 shows example visualizations from two different batches of the PAM dataset: images (a) and (b) are from one batch, while images (c) and (d) are from another batch, both have mini-batch of size 32. Positive pairs within each batch are color-coded. The darkest shade represents negative pairs.

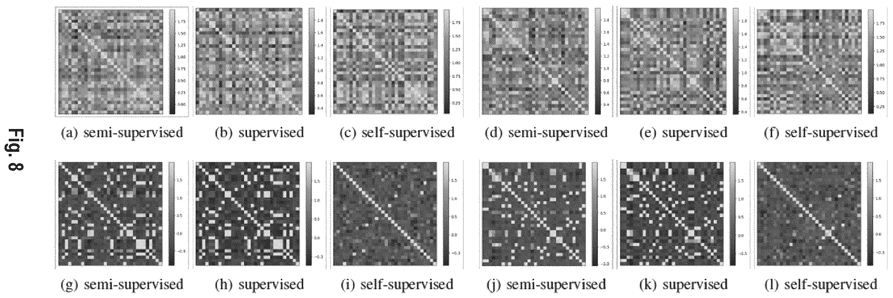

Figure 8 shows similarity heatmaps illustrating the contrastive loss formulation in the presented model 200 for two mini-batches of size 32 from the PAM dataset. The top row displays similarities between latent embeddings Zᵢ and Z^ᵢ for an untrained model, while the bottom row shows similarities between Zᵢ and Z^ᵢ for a trained model. Plots (a)-(c) and (g)-(i) pertain to one batch (same batch as plots (a) and (b) in Figure 7), whereas plots (d)-(f) and (j)-(l) pertain to another batch (same batch as plots (c) and (d) in Figure 7).

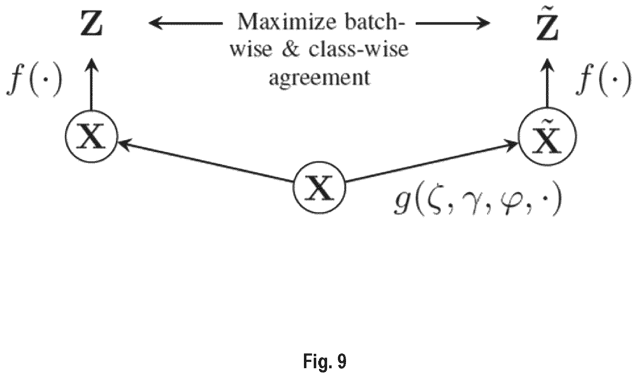

Figure 9 shows the model's 200 contrastive learning. The masking, *g*, generates 2 correlated views. The encoder, *f*, is trained to maximize the trade-off between batch- and class-wise agreement of the latent embeddings Zᵢ and Z^{∼}ᵢ, while training for a downstream task.

The features of the invention described with reference to the illustrated embodiments may also be present in other embodiments of the invention, unless otherwise stated or technically impossible.

### REFERENCE NUMERALS

- 100: system
- 102: module
- 104: module
- 106: module
- 108: module
- 110: module
- 200: machine learning model
- 202: transformer architecture
- 203: time series training data
- 204: input data
- 206: attention layer
- 208: encoder layer
- 210: dynamic region masking
- 212: masked training data
- 214: semi-supervised contrastive learning
- 216: latent space representation
- 218: trained machine learning model
- 220: token
- 221: loss function
- 222: multi-layer perceptron layer
- 223: output
- 224: correlated latent representation
- 226: correlated latent representation
- 228: batch-wise contrastive loss function
- 230: class-wise contrastive loss function
- 232: fused loss function

- BW: batch-wise
- CW: class-wise
- S1: method step
- S2: method step
- S3: method step
- S4: method step
- S5: method step

## Claims

1. A method for training a machine learning model (200) having a transformer architecture (202), the method comprising:
- providing (S1) time series training data (203) to the machine learning model (200) as input data (204), the machine learning model (200) processing the time series training data (203) via at least one attention layer (206) of at least one encoder layer (208) of the transformer architecture (202);
- applying (S2) a dynamic region masking (210) of the time series training data (203) based on attention weights of the attention layer (206) to derive masked training data (212);
- providing (S3) the masked training data (212) to the machine learning model (200) as input data (204);
- performing (S4) semi-supervised contrastive learning (214) of a latent space representation (216) of the time series training data (203) and the masked training data (212) derived from the at least one encoder layer (208); and
- providing (S5) the thereby trained machine learning model (218) for performing a downstream task.

2. The method of claim 1, wherein the attention weights of the attention layer (206) comprise information about a number of attention layers (206) and/or a batch size of a time series training data (203) set comprising the time series training data (203) and/or a number of elements in a sequence of the time series training data (203).

3. The method of claim 1 or 2, wherein the dynamic region masking (210) comprises an attention rollout technique considering a flow of information within the layers of the transformer architecture (202).

4. The method of any one of the preceding claims, wherein the regional masking (210) comprises determining a maximum number of elements of the time series training data (203) that are to be masked, determining a number of sequential elements of the time series training data (203) that are to be masked based on attention scores of the at least one attention layer (206), and determining bounds of a region of the time series training data (203) that is to be masked.

5. The method of any one of the preceding claims, wherein the performing (S4) semi-supervised contrastive learning (214) comprises creating two correlated latent representations (224, 226) and learning to optimize a trade-off between the two latent representations (224, 226) by leveraging batch-wise positive pairs of masked and unmasked embeddings of the time series training data (203) and class-wise positive pairs of masked and unmasked embeddings of the time series training data (203) of a same class.

6. The method of claim 5, wherein based on the positive pairs, self-supervised learning is performed using batch-wise similarities between the embeddings of the time series training data (203) and supervised learning is performed using class-wise similarities between the embeddings of the time series training data (203).

7. The method of claim 5 or 6, wherein the semi-supervised contrastive learning (214) comprises minimizing a batch-wise contrastive loss function (228) and a class-wise contrastive loss function (230).

8. The method of claim 7, wherein a fused loss function (232) for the semi-supervised contrastive learning (214) is provided by weighting the batch-wise contrastive loss function (228) and the class-wise contrastive loss function (230) based on a tunable hyperparameter.

9. The method of any one of the preceding claims, wherein the time series training data (203) is classified using a token (220) capturing dependencies between sequential elements of the time series training data (203) via a self-attention mechanism of the at least one encoder layer (208).

10. The method of claim 9, wherein, based on the token (220), classification is performed using a multi-layer perceptron layer (222) of the machine learning model (200).

11. The method of any one of the preceding claims, wherein the time series training data (203) comprises irregularly sampled time series data and/or spatiotemporal sequential data and/or non-stationary, spatiotemporal and irregularly sampled time series data and/or regular time series data.

12. A method of applying a machine learning model (218) trained according to the method of anyone of claims 1 to 11, comprising:
- providing the trained machine learning model (218);
- applying the trained machine learning model (218) in an application for classification and/or in an application for anomaly detection and/or in an application for regression, for localization and tracking via ultra-wideband technology and/or in an application of digital car keys.

13. System (100) for training a machine learning model (200) having a transformer architecture (202), the system (100) comprising:
- a first module (102) for providing time series training data (203) to the machine learning model (200) as input data (204), the machine learning model (200) processing the time series training data (203) via at least one attention layer (206) of at least one encoder layer (208) of the transformer architecture (202);
- a second module (104) for applying a dynamic region masking (210) of the time series training data (212) based on attention weights of the attention layer (206) to derive masked training data (212);
- a third module (106) for providing the masked training data (212) to the machine learning model (200) as input data (204);
- a fourth module (108) for performing semi-supervised contrastive learning (214) of a latent space representation (216) of the time series training data (203) and the masked training data (212) derived from the at least one encoder layer (208); and
- a fifth module (110) for providing the thereby trained machine learning model (218) for performing a downstream task.

14. A computer program product comprising instructions that, when a computer executes the method according to any one of claims 1 to 12, cause the computer to execute the method according to any one of claims 1 to 12.

15. A computer-readable medium having stored thereon the computer program product of the preceding claim.
